# EUROPEAN PATENT SPECIFICATION

(11) **EP 4 445 735 B1**
(45) Date of publication and mention of the grant of the patent: **13.05.2026**
(21) Application number: 24185928.9
(22) Date of filing: 24.04.2023
(51) Int. Cl.: A22C 11/00, A22C 11/10, A22C 11/12

(54) **MEAT STUFFING MACHINE**
FLEISCHFÜLLMASCHINE
MACHINE DE BOURRAGE DE VIANDE

(30) Priority: 28.04.2022 IT 202200008396
(43) Date of publication of application: 16.10.2024
(62) Divisional of application: 23169534.7
(73) Proprietor: INOX Meccanica S.P.A., 46044 Goito, Frazione Solarolo (MN) (IT)
(72) Inventor: BOLZACCHINI, Giovanni, 25017 LONATO DEL GARDA BS (IT)
(74) Representative: Modiano, Micaela Nadia

(56) References cited:
- EP-A1- 2 883 696
- EP-A1- 4 268 599
- EP-A2- 0 242 944
- EP-B1- 1 771 339
- US-A- 4 847 951

## Description

The present invention relates to a meat stuffing machine.

Stuffing machines are known which allow, in an automatic manner, to insert a food product constituted by portions of meat into a tubular enclosure, constituted typically by a casing, and to close, by means of adapted clips, constituted by laces or clips, the ends of the casing.

Machines of this type (cf. e.g. document EP 0 242 944 A2) are generally constituted by a frame which supports at least one mold, which forms a recess designed to receive the product to be stuffed.

A pusher acts at the mold and translates the portion of meat placed in the mold through a stuffing tube, on the outer surface of which a casing is manually fitted beforehand by an operator and is closed, at its end facing the outlet end of the stuffing tube, by means of a clipping head.

Upon exiting the stuffing tube, the portion of meat moved by the pusher encounters the closed end of the casing and drags it along with it, gradually unfolding the casing from the stuffing tube, thus achieving the insertion of the portion of meat into a portion of the casing, which is subsequently sheared off and, therefore, closed, also at its other end, by the clipping head.

The drawback of machines structured in this way is that they require constant manual intervention by operators to position the casing on the stuffing tube, with the consequent necessary use of labor and the obviously associated costs.

Another drawback of these machines is that they require the use of casings that have a significantly larger diameter with respect to the diameter of the stuffing tube, in order to allow operators to fit the casings easily and without risk of breakage on the stuffing tube.

However, this fact entails that the casing that is used is dimensionally much wider even with respect to the portion of meat that exits the stuffing tube and is inserted into it, a situation that is not considered optimal for certain types of stuffed-meat products.

The aim of the present invention is to provide a meat stuffing machine that is capable of overcoming one or more of the drawbacks of the background art.

Within this aim, an object of the invention is to provide a meat stuffing machine that allows to perform, in an automatic manner, the positioning of the tubular enclosure on the stuffing tube, so as to limit the manual intervention of the operators on the machine.

Another object of the invention is to provide a stuffing machine capable of ensuring that the tubular enclosure is always in optimal conditions to receive the product to be stuffed inside it.

A further object of the present invention is to provide a stuffing machine that allows to prepare the product to be stuffed by properly compacting it in the tubular enclosure, without leaving air inside.

Still another object of the invention is to provide a stuffing machine that allows to use casings with diametrical dimensions that substantially correspond to those of the portions of meat to be stuffed.

Another object of the present invention is to provide a meat stuffing machine capable of giving the greatest assurances of reliability and safety in its operation.

Another object of the present invention is to provide a meat stuffing machine that overcomes the drawbacks of the background art in a manner that is alternative to any existing solutions.

Not least object of the invention is to provide a meat stuffing machine that is relatively simple to provide, so as to be competitive also from a purely economic point of view.

This aim, as well as these and other objects that will become better apparent hereinafter, are achieved by a stuffing machine according to claim 1, optionally provided with one or more of the characteristics of the dependent claims.

Further characteristics and advantages of the invention will become better apparent from the description of a preferred but not exclusive embodiment of the machine according to the invention, illustrated by way of non-limiting example in the accompanying drawings, wherein:

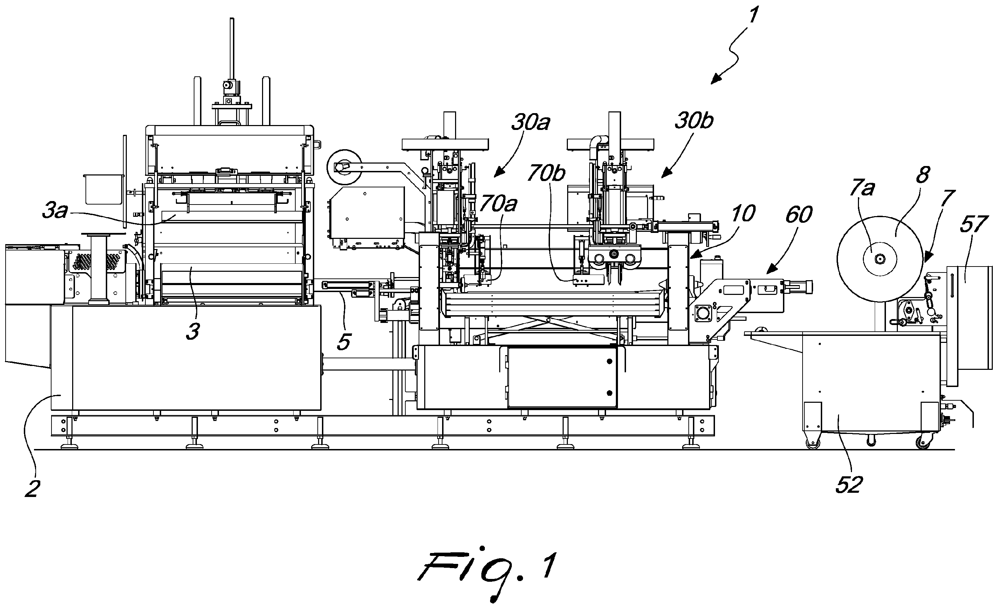

Figure 1 is a lateral elevation view of a portion of the machine according to the invention, with parts omitted and others shown partially for the sake of simplicity;

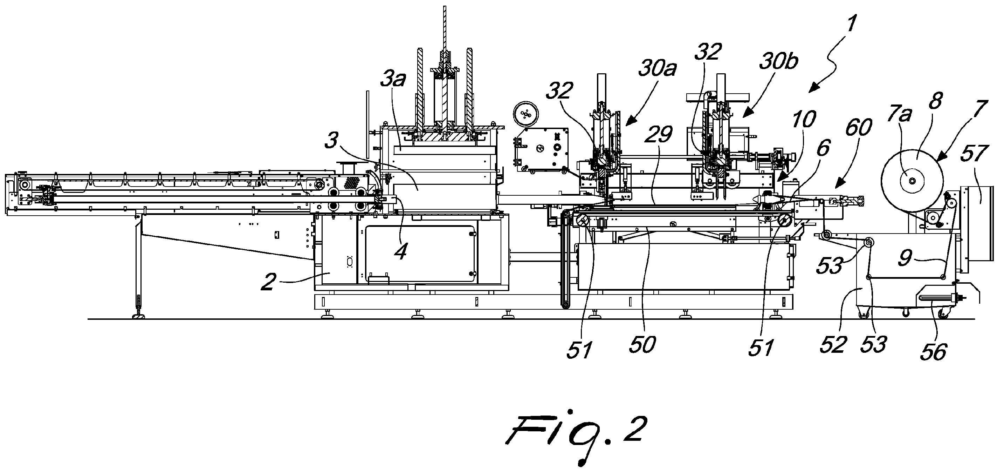

Figure 2 is a longitudinally section lateral elevation view of the machine according to the invention;

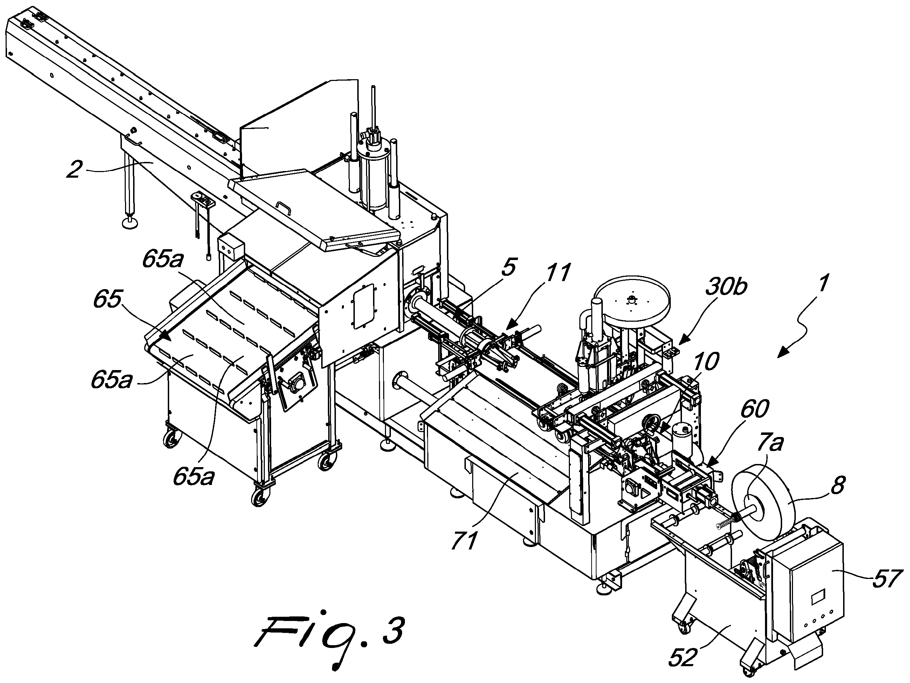

Figure 3 is an elevated perspective view of the machine according to the invention, in which a first clipping head and other parts of the machine have been omitted for the sake of simplicity;

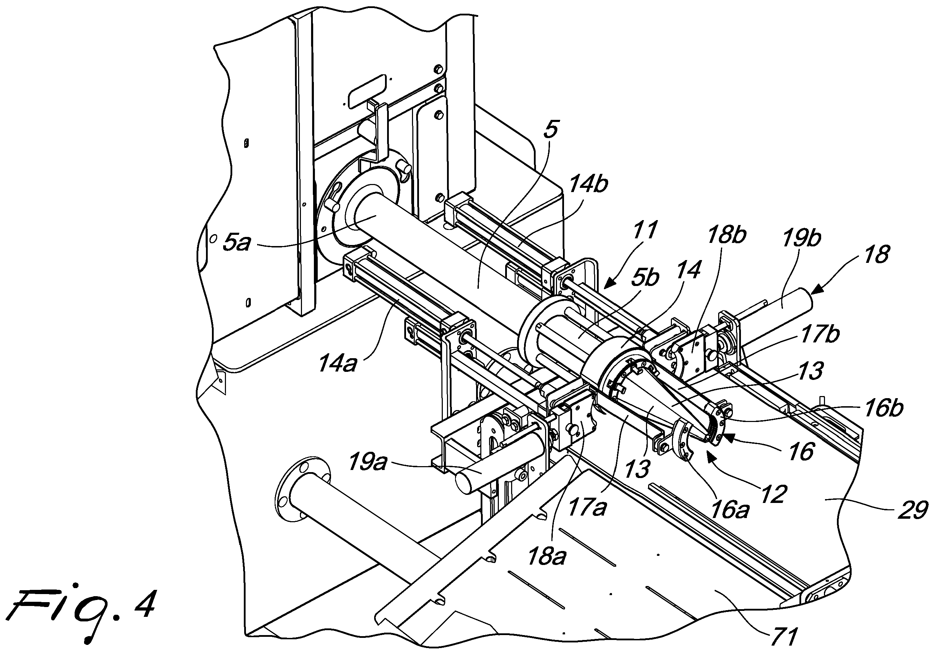

Figure 4 is an enlarged-scale view of a detail of Figure 3;

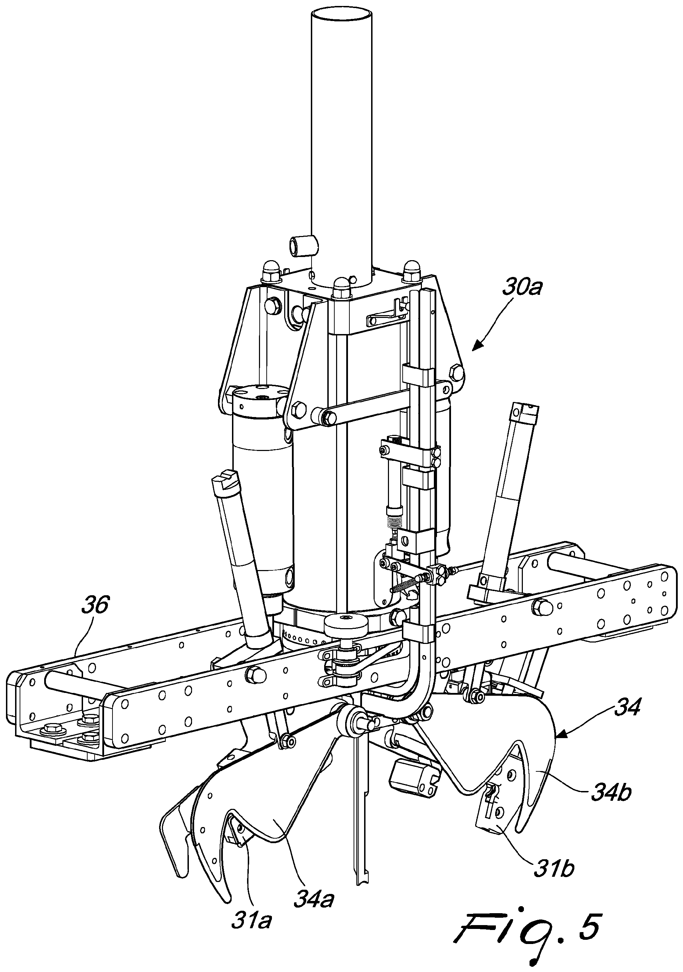

Figure 5 is a perspective view of a first clipping head of the machine according to the invention in the deactivated condition;

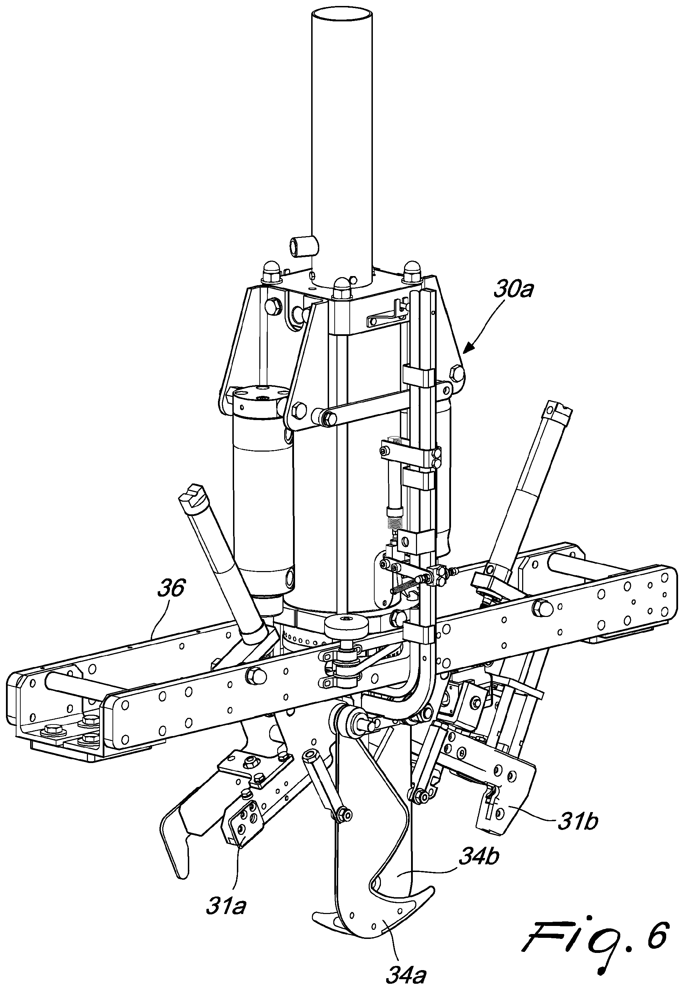

Figure 6 is a perspective view of the first clipping head with separator means in the activated condition;

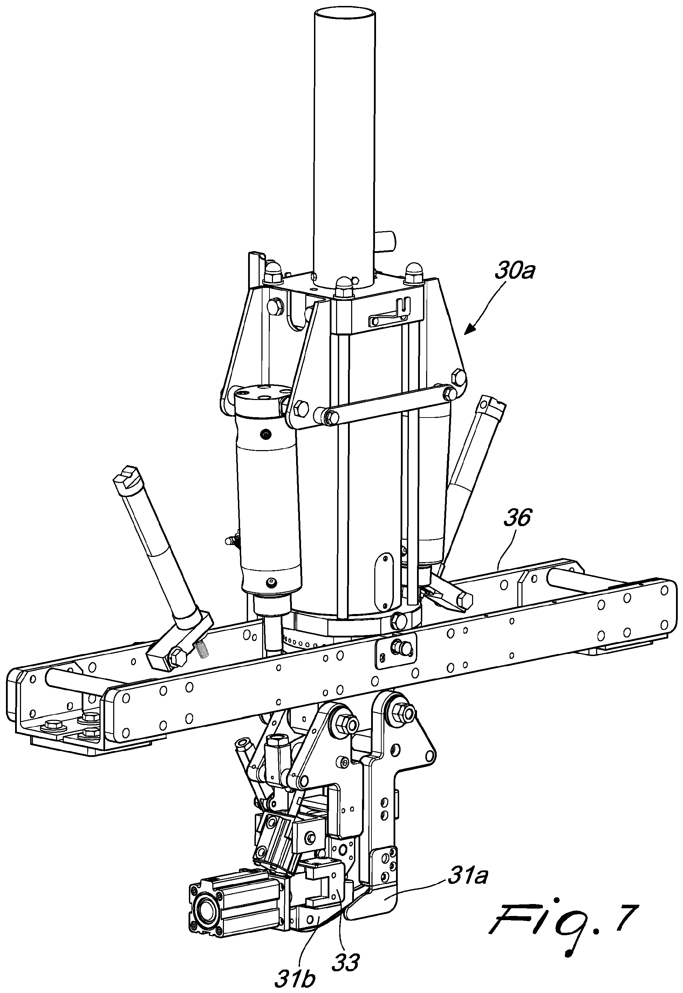

Figure 7 is a perspective view, from a different angle, of the first clipping head of the machine according to the invention with the corresponding crimpers in the working position;

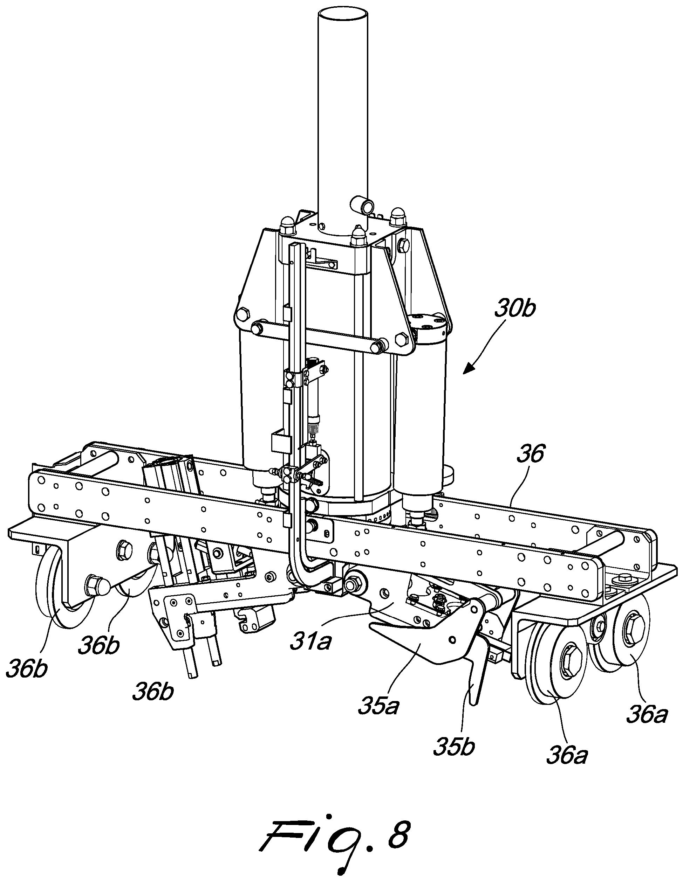

Figure 8 is a perspective view of a second clipping head of the machine according to the invention in the deactivated condition;

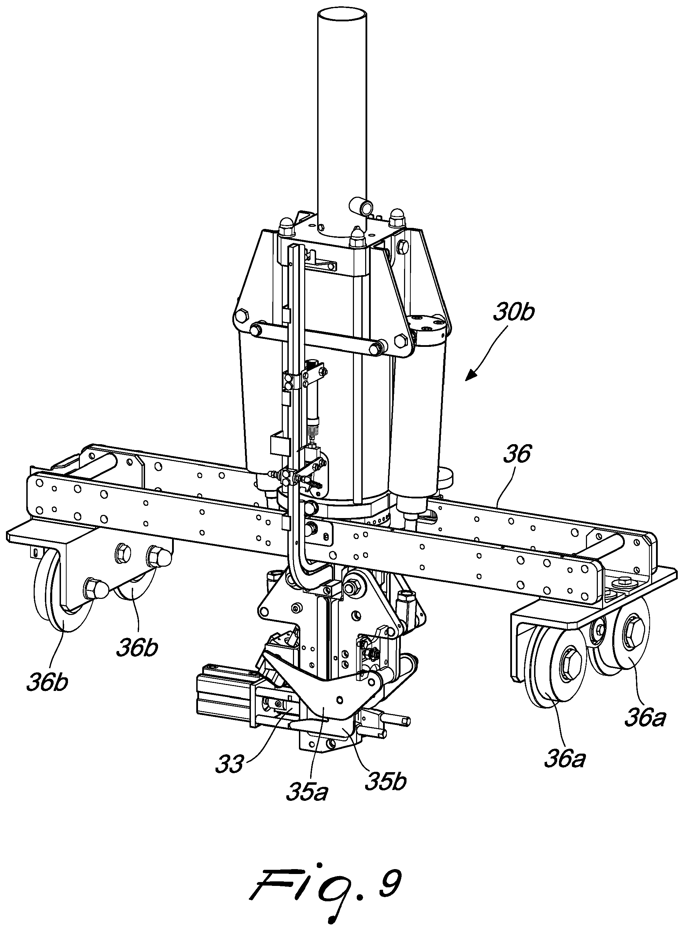

Figure 9 is a perspective view of the second clipping head in the deactivated condition;

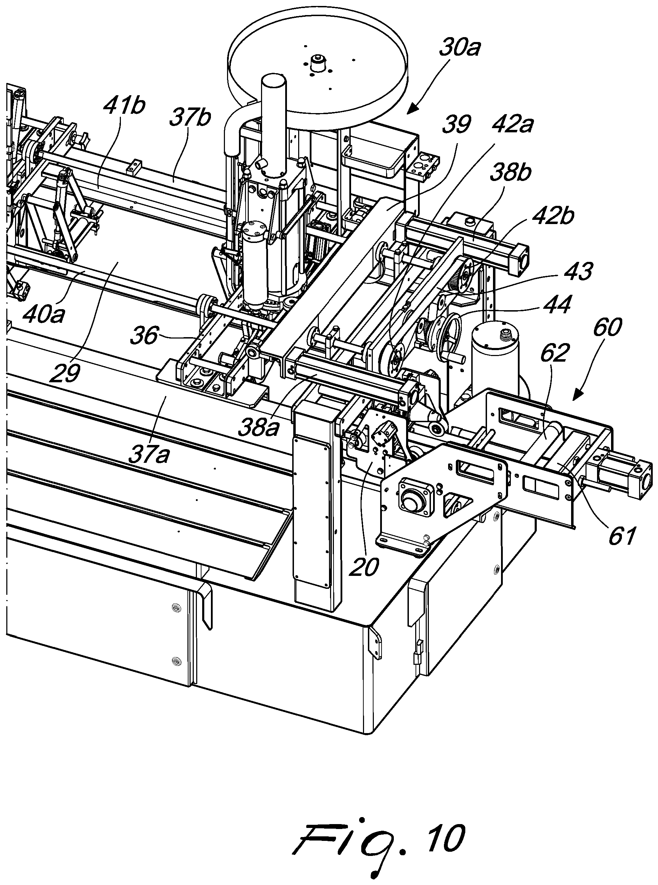

Figure 10 is an elevated perspective view of a portion of the machine according to the invention;

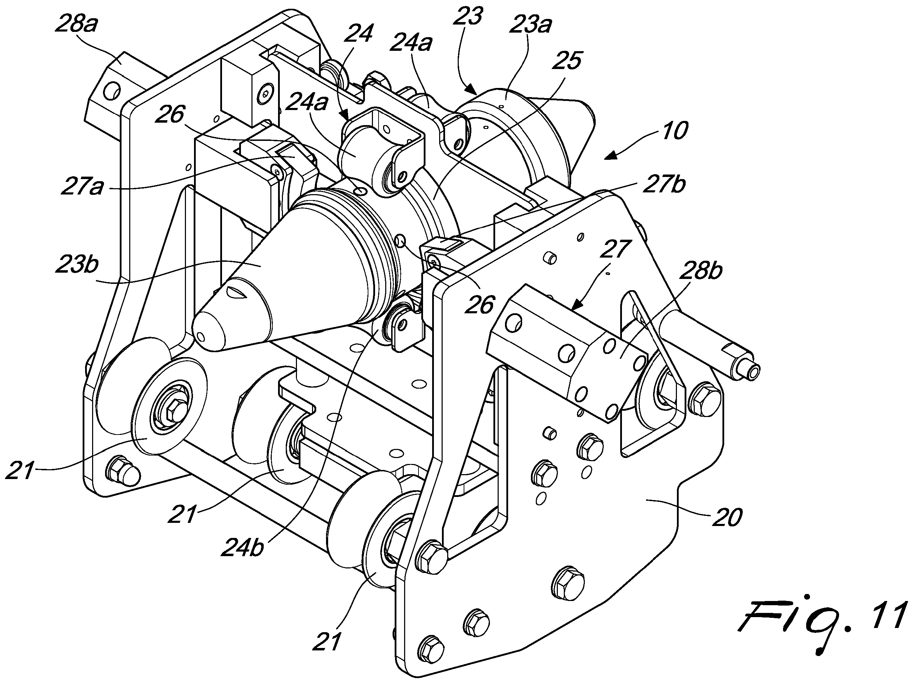

Figure 11 is a perspective view of the supporting means of the casing;

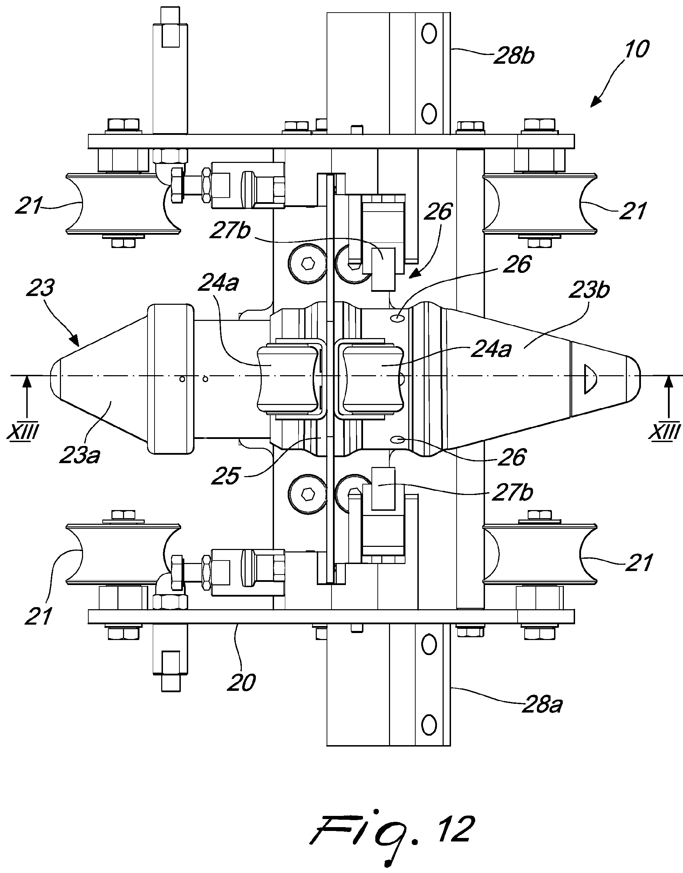

Figure 12 is a top plan view of the casing supporting means;

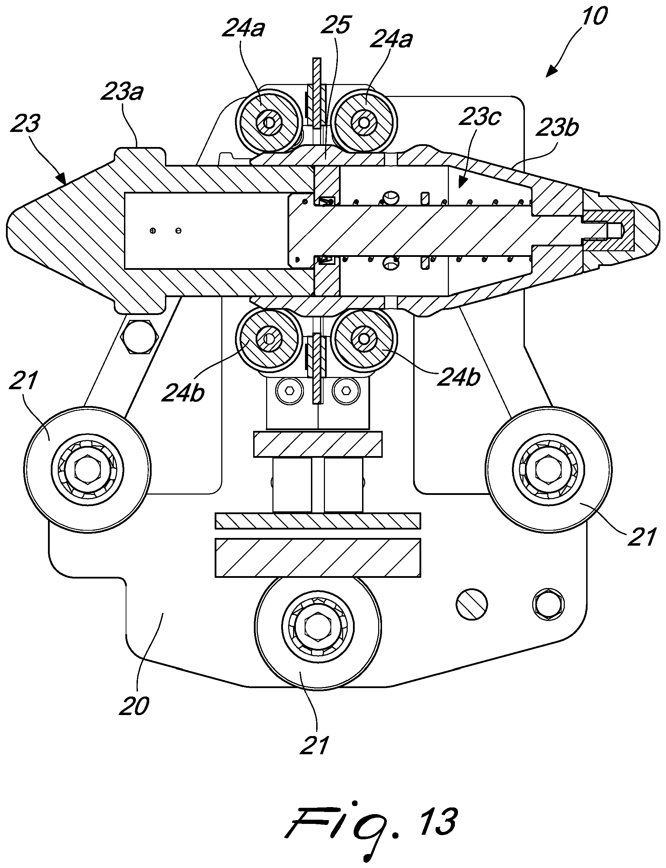

Figure 13 is a sectional view, taken along the plane XIII-XIII of Figure 12;

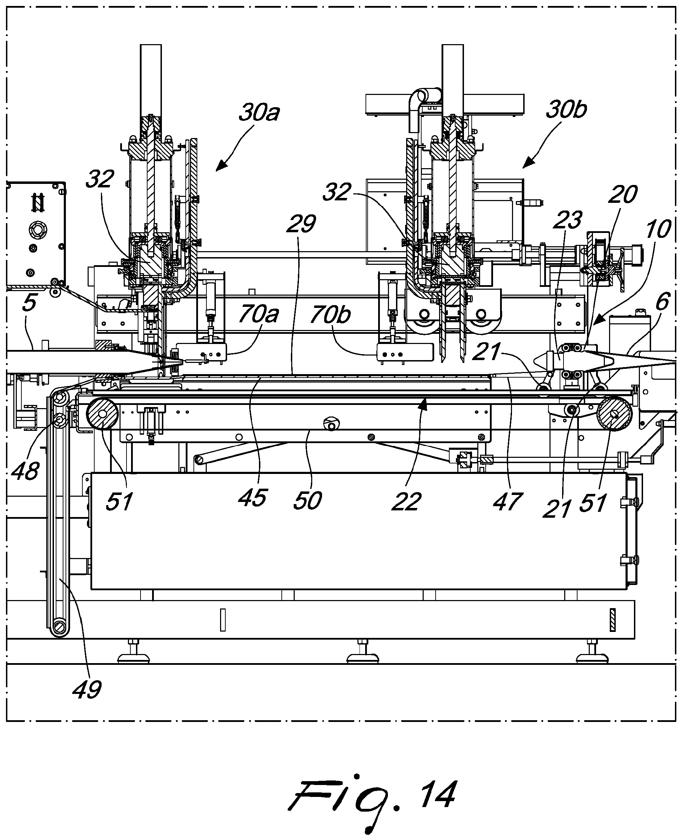

Figure 14 is a longitudinal sectional view of a portion of the machine according to the invention, with parts omitted for the sake of simplicity;

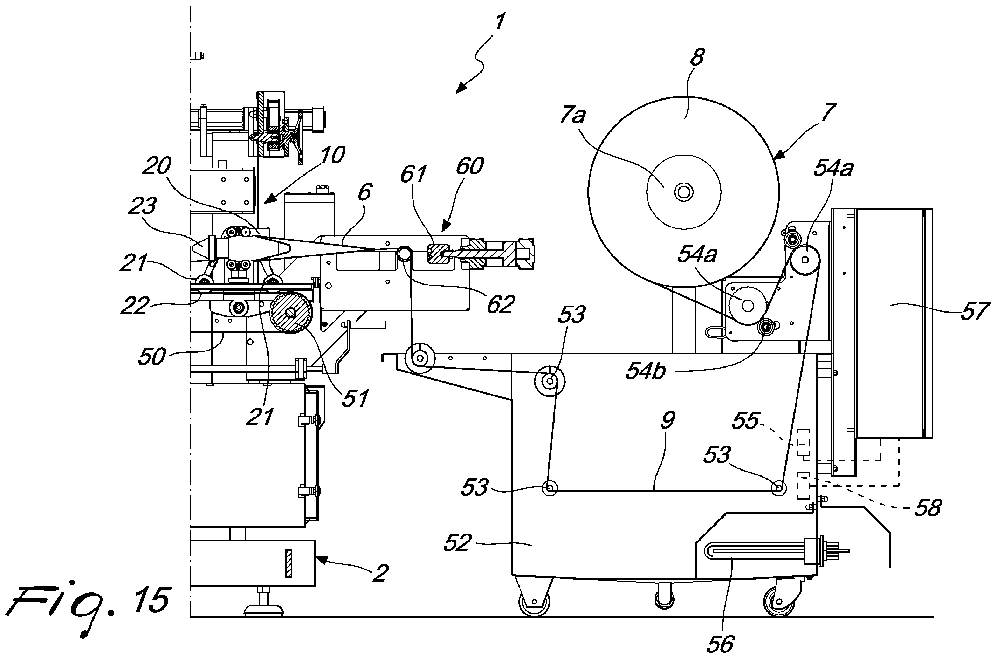

Figure 15 is a longitudinal sectional view of another portion of the machine according to the invention;

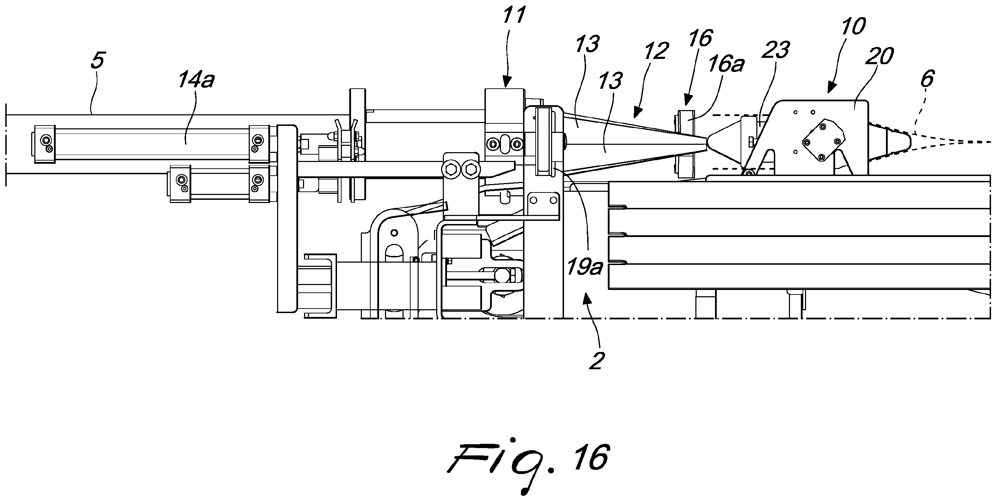

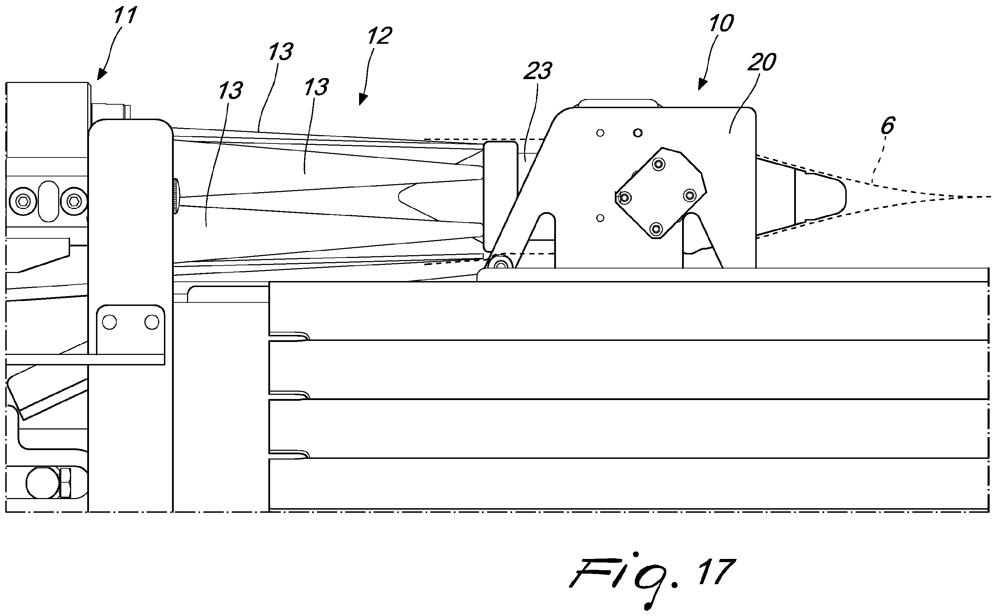

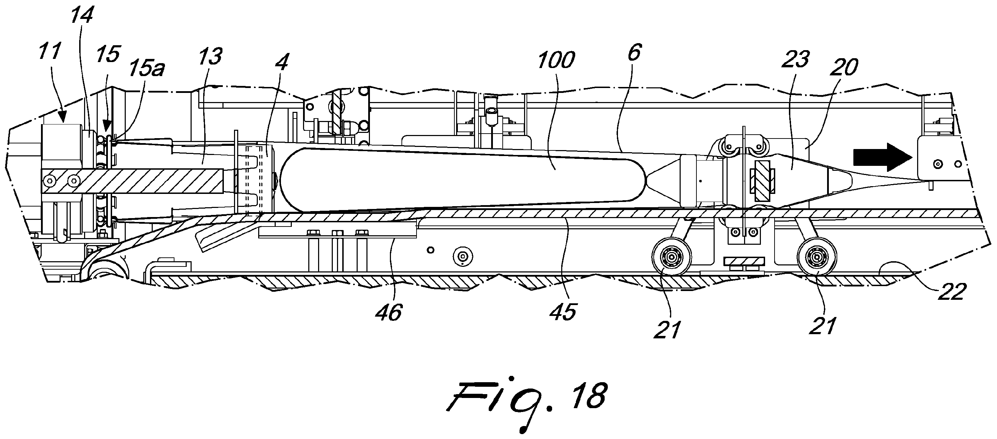

Figures 16 to 18 are lateral elevation views, partially in phantom lines, of some operational steps of the operation of the machine according to the invention, with parts shown in cross-section and others omitted for the sake of simplicity.

With reference to the figures, the meat stuffing machine according to the invention, generally designated by the reference numeral 1, comprises a base frame 2, which supports at least one mold 3 that allows to form a portion of meat 100 to be stuffed, in cooperation with a complementary mold 3a, which is arranged above the mold 3 and is actuated, by virtue of actuation means, between an open condition and a closed condition of the mold 3.

Moreover, the machine comprises a pusher 4 which is conveniently actuated by an electric cylinder, supported by the base frame 2.

The pusher 4 allows to push the portion of meat 100, after forming in the mold 3, through a stuffing tube 5, which, at an inlet end thereof 5a, communicates with the mold 3.

A casing 6 can be fitted on the stuffing tube 5 and is intended to accommodate inside it the portion of meat 100 that is dragged by the pusher 4 past the outlet end 5b of the stuffing tube 5.

The meat stuffing machine according to the invention comprises means 7 for unwinding a spool 8 of a ribbon 9 of the casing 6 which is arranged in a flattened condition, i.e., with two mutually opposite longitudinal walls of the casing 6 mutually in contact.

Such unwinding means 7 conveniently comprise a supporting roller 7a, which can rotate freely and on which the spool 8 of the ribbon 9 of the casing 6 is mounted, and means for dragging the ribbon 9 of the casing 6 being unwound from the spool 8, which will be described in greater detail hereinafter.

Also according to the invention, supporting means 10, also described in greater detail hereinafter, are furthermore provided and allow to support the inlet end 6a of the casing 6 in the open condition.

In particular, said supporting means 10 are movable on command between a retracted position, in which they are spaced from the outlet end 5b of the stuffing tube 5, and an advanced position, in which they are moved closer to the outlet end 5b of the stuffing tube 5, so as to allow the application of the casing 6 on the stuffing tube 5.

Conveniently, the motion of the supporting means 10 between their retracted position and their advanced position occurs along a linear trajectory that is substantially parallel to the axis of the stuffing tube 5.

Also according to the invention, at the stuffing tube 5 there are means 11 for the application of the casing 6 on the stuffing tube 5, which can be activated on command to fit, in an automatic manner, at least one portion of the casing 6 on the stuffing tube 5.

Said application means 11 are provided with engagement means 12 for the casing 6, which are advantageously mounted substantially coaxially to the axis of the stuffing tube 5.

In particular, the engagement means 12 are movable between two extreme positions, more specifically between a receiving position and an application position, so that by means of their movement they can drag a portion of the casing 6 onto the stuffing tube 5.

More particularly, in the receiving position, the engagement means 12 are arranged in a position facing the outlet end 5b of the stuffing tube 5 and in a retracted condition in the direction of the axis of the stuffing tube 5, so as to allow their insertion in the inlet end 6a of the casing 6 when the supporting means 10 of the casing 6 are in their advanced position.

In the application position, instead, the engagement means 12 are spaced with respect to the outlet end 5b of the stuffing tube 5 in the direction of the mold 3 and in an expanded condition with respect to the axis of the stuffing tube 5, so as to be able to engage the internal surface of the casing 6, so as to achieve, through their passage from the receiving position to the application position, the application of a portion of the casing 6 on the stuffing tube 5.

Advantageously, the engagement means 12 comprise a plurality of laminas 13 that extend longitudinally and are distributed around the axis of the stuffing tube 5.

At one of its ends directed toward the mold 3, each lamina 13 is connected so that it can oscillate, about a respective oscillation axis which is substantially perpendicular to a diametrical plane that passes through the axis of the stuffing tube and through the longitudinal axis of the corresponding lamina 13, to a supporting body 14, preferably having an annular shape, which is mounted around the stuffing tube 5.

In particular, the supporting body 14 can slide along the stuffing tube 5, so that when it slides along the stuffing tube 5 the laminas 13 can in turn engage the stuffing tube 5 slidingly, so that they can pass, in contrast with elastic return means 15, from a position of disengagement from the casing 6, which corresponds in practice to said receiving position of the engagement means 12, to a position of engagement with the casing 6, which corresponds to the application position of the engagement means 12.

In particular, in the disengagement position, the laminas 13 are located in a facing position with respect to the outlet end 5b of the stuffing tube 5 and are arranged so that their longitudinal axis is inclined with respect to the axis of the stuffing tube 5 and converges toward said axis of the stuffing tube 5, proceeding from their end connected to the supporting body 14 toward their other end, so as to give the engagement means 12 a substantially conical configuration.

In the engagement position, the laminas 13 are instead arranged substantially parallel to the axis of the stuffing tube 5 and in a position that is spaced from the outlet end 5b of the stuffing tube 5 in the direction of the mold 3.

It should be noted that the elastic return means 15 may conveniently be constituted by an elastic ring 15a, which is substantially coaxial to the axis of the stuffing tube 5 and engages the surface of the laminas 13 that is directed away from the axis of the stuffing tube 5.

The sliding movement of the supporting body 14 along the stuffing tube 5 is conveniently provided by actuation cylinders 14a, 14b, which act between the supporting body 14 and the base frame 2.

Advantageously, the supporting body 14 also supports locator means 16, which are arranged around the laminas 13 so that they face the surface of the laminas 13 that is directed away from the axis of the stuffing tube 5.

The locator means 16 are designed to engage the casing 6, when the laminas 13 are in their engagement position, in order to allow the removable retention of the casing 6 between the laminas 13 in the engagement position and the locator means.

In particular, the locator means 16 are conveniently provided by a pair of retention pads 16a, 16b, which are arranged on diametrically mutually opposite sides with respect to the axis of stuffing tube 5 and are supported by respective arms 17a, 17b, which extend from the supporting body 14 substantially parallel to the axis of the stuffing tube 5.

Advantageously, braking means 18 are provided which can be activated on command to block the portion of the casing 6 that is fitted on the stuffing tube 5 by the application means 11, in order to ensure safer retention of the casing 6 on the stuffing tube 5 with respect to the retention ensured by the locator means 16 alone.

Conveniently, said braking means 18 are provided by a pair of braking shoes 18a and 18b, which are arranged mutually oppositely and laterally to the stuffing tube 5 and can be actuated toward or away from the outer lateral surface of the stuffing tube 5 by respective pneumatic cylinders 19a, 19b, in order to allow clamping of the casing 6 between the stuffing tube 5 and said braking shoes and its consequent locking relative to the stuffing tube 5.

As shown, the supporting means 10 comprise a carriage 20, which can be moved by translation, with respect to the base frame 2, along a direction of movement that is substantially parallel to the axis of the stuffing tube 5.

Conveniently, the carriage 20 is slidingly mounted, by means of sliding wheels 21, on linear guides 22, which are formed on the base frame 2 and extend substantially parallel to the axis of the stuffing tube 5.

The supporting means 10 further comprise a body 23 for opening the casing 6, which can be inserted axially and slidingly into the casing 6, so that the casing 6 can be opened by parting its two longitudinal walls, which in the flattened condition are in contact with each other.

The opening body 23 is supported by the carriage 20 in such a way as to be integral with the carriage 20 in its translation movement.

In particular, the opening body 23 is supported by the carriage 20 by virtue of resting means 24 that are adapted to allow relative sliding between the casing 6 and the opening body 23, while ensuring the integral movement of the opening body 23 with the carriage 20.

In greater detail, the opening body 23 has a substantially cylindrical shape with an axis that is oriented substantially parallel to the axis of the stuffing tube 5.

Preferably, the opening body 23 is supported by the resting means 24 in a substantially floating manner, i.e., so that it can oscillate, for limited angles, about an axis that is substantially transverse with respect to the direction of movement of the carriage 20.

Conveniently, the resting means 24 comprise resting rollers 24a, 24b, which are mounted rotatably on the carriage 20 and are arranged on mutually diametrically opposite sides with respect to the axis of the opening body 23.

The resting rollers 24a and 24b are conveniently arranged with a certain play with respect to mutually opposite portions of the lateral surface of the opening body 23.

Advantageously, the opening body 23 has, on its lateral surface, an annular raised portion 25 that extends around the axis of the opening body 23.

In particular, two pairs of resting rollers 24a, 24b are conveniently mounted on the carriage 20, more specifically a first pair of resting rollers 24a, located above the opening body 23, and a second pair of resting rollers 24b, located below the opening body 23.

More particularly, the opening body 23 is arranged on the carriage 20 so that the annular raised portion 25 is interposed with play between the resting rollers 24a, 24b of each pair, so that the axial displacement of the opening body 23 with respect to the carriage 20 is prevented by the engagement of the annular raised portion 25 against the resting rollers 24a, 24b, while some possibility of oscillation of the opening body 23 with respect to the carriage 20 is allowed by virtue of the play between the resting rollers 24a, 24b and the annular raised portion 25.

The casing 6 is connected to the supporting means 10 by fitting its inlet end 6a around the opening body 23 and by making it pass slidingly between the opening body 23 and the resting rollers 24a, 24b.

Conveniently, the opening body 23 is internally hollow and is provided with two mutually coupled parts constituted by a front portion 23a, directed toward the stuffing tube 5, and a rear portion 23b, which is opposite with respect to the front portion 23a and is directed toward the unwinding means 7.

The front portion 23a and the rear portion 23b of the opening body 23 can be moved slidingly closer to each other in contrast with elastic pusher means 23c which are accommodated within the opening body 23.

Advantageously, the opening body 23, preferably at its rear portion 23b, is provided with ports 26 for the passage of air between the inside and the outside of the opening body 23.

Such ports 26 allow, as a result of the mutual approach of the front and rear portions 23a, 23b of the opening body 23, to inject air into the casing 6 so as to facilitate its opening.

Conveniently, again in order to facilitate the opening of the casing 6 starting from the flattened condition, the opening body 23 has a substantially conical shape at its end directed toward the unwinding means 7, so as to facilitate the parting of the longitudinal portions of the casing 6 that in the flattened condition are mutually in contact, as a result of the axial sliding of the opening body 23 inside the casing 6.

Advantageously, the end of the opening body 23 directed toward the stuffing tube 5 can also have a substantially conical shape, so that it can be inserted between the laminas 13 of the engagement means 12 when the latter are moved toward their application position, so as to create a surface continuity between the opening body 23 and the laminas 13 and consequently facilitate the transfer of the casing 6 onto the stuffing tube 5.

As shown, the carriage 20 supports means 27 for removable retention of the portion of the casing 6 that is fitted on the opening body 23, which, when activated, allow to retain the casing 6 to be retained on the opening body 23, so as to render it integral with the movement of the carriage 20.

In particular, the removable retention means 27 are constituted by a pair of engagement shoes 27a, 27b, which act on mutually opposite sides with respect to the axis of the opening body 23 and can be moved, by respective actuation cylinders 28a, 28b, between a position that is closer to the opening body 23, in which they can clamp the casing 6 against the opening body 23, so as to lock it with respect to the carriage 20, and a position that is spaced from the opening body 23, in which they are disengaged from the casing 6, in order to allow the axial sliding of the casing with respect to the opening body 23 and the carriage 20.

Advantageously, on the base frame 2, downstream of the stuffing tube 5 along the advancement direction of the portion of meat 100 through said stuffing tube, there is a resting surface 29 designed to receive the portion of meat 100 that is dragged past the outlet end 5b of the stuffing tube 5 and is inserted into the casing 6 by the action of the pusher 4.

Conveniently, again downstream of the stuffing tube 5, with respect to the advancement direction of the portion of meat 100 through the stuffing tube 5, there is a pair of clipping heads, and more specifically a first clipping head 30a and a second clipping head 30b, which can be actuated on command to close and cut the casing 6, at regions of the casing 6 that are substantially close to the longitudinal ends of the portion of meat 100, once the latter has been carried past the outlet end 5b of the stuffing tube 5 and has thus been fully inserted into the casing 6 by the pusher 4.

In particular, the clipping heads 30a and 30b are arranged between the stuffing tube 5 and the unwinding means 7 and can be positioned adjustably, relative to each other, at a predetermined distance from each other, along a direction that is substantially parallel to the axis of the stuffing tube 5, as a function of the longitudinal length of the portion of meat 100 that is to be inserted into the casing 6.

More particularly, the first clipping head 30a is designed to act on a portion of the casing 6 comprised between the stuffing tube 5 and the longitudinal end of the portion of meat 100 located to the rear with respect to the advancement direction of such portion of meat, while the second clipping head 30b acts on a portion of the casing 6 that is located between the front longitudinal end of the portion of meat 100 and the supporting means 10 of the casing 6 in the retracted position.

The clipping heads 30a, 30b, when activated, allow to gather the casing 6 around the longitudinal end of the portion of meat 100 at which they act, so that the casing 6 can adhere properly to the entire surface of the portion of meat 100, and then allow to close the casing 6 proximate to the corresponding longitudinal end of the portion of meat 100 by means of the application of at least one respective clip.

Once the respective clip for closing the casing 6 has been applied, the two clipping heads 30a and 30b cut the casing 6, and more particularly the first clipping head 30a cuts the casing 6 in a portion comprised between the stuffing tube 5 and the respective clip, while the second clipping head 30b cuts the casing 6 between the respective clip and the supporting means 10 in the retracted position.

Each of the two clipping heads 30a, 30b comprises a pair of respective crimpers 31a, 31b, which can be actuated rotationally by a respective cylinder in order to pass from a resting position, in which they are spaced laterally with respect to the axis of the stuffing tube 5, to a working position, in which they are close to the axis of the stuffing tube 5 so that they can act on a respective portion of the casing 6.

A punch 32 acts above the crimpers 31a, 32b and is actuated by a corresponding cylinder which moves the clips into abutment against the crimpers 31a, 31b when the latter are in the working position.

Conveniently, the clipping heads 30a and 30b are also provided with a respective cutting blade 33, which is integral with one of the crimpers 31a, 32b and is actuated by a corresponding cylinder, to cut the casing 6.

Advantageously, the first clipping head 30a is provided with separator means 34, which can be actuated on command in order to engage the casing 6, so as to gather it around the portion of meat inserted in the casing 6, acting moreover as an abutment to prevent, at the same time, the portion of meat 100 from being dragged backward toward the stuffing tube 5, with the risk, therefore, of encroaching on the region where the die supporting crimpers 31a, 31b of the first clipping head 3a act, as a result of the negative pressure that is produced in the casing 6, when the pusher 4 is returned toward the mold 3, after the portion of meat 100 has been carried by said pusher between the two clipping heads 30a, 30b.

The separator means 34 are conveniently constituted by a pair of separator elements 34a, 34b, which are hinged with respect to the supporting frame 2 and can be actuated so as to oscillate by respective cylinders, in order to move from an open condition, in which they are laterally spaced with respect to the axis of the stuffing tube 5, so as not to engage the casing 6, to a closed position, in which they are mutually closer in the direction of the axis of the stuffing tube 5, in order to engage the casing 6, so as to gather it toward the axis of stuffing tube 5, making it adhere to the rear end of the portion of meat 100 and ready to receive the clip from the first clipping head 30a.

At the second clipping head 30b there are gathering elements 35a, 35b which allow to prepare the casing 6 for clipping while preventing the portion of meat 100 from deforming, invading the clipping region.

Conveniently, the gathering elements 35a, 35b are carried by one of the crimpers 31a, 31b of the second clipping head 30b and are arranged so as to substantially form a fork in which the casing 6 is gathered when the crimpers 31a, 31b of the second clipping head 30b are moved into the working position.

Advantageously, at least one of the two clipping heads 30a and 30b is movable toward the other in order to allow the compaction of the portion of meat 100 inserted into the casing 6.

In particular, the second clipping head 30b is mounted so that it can move by translation, with respect to the base frame 2, along a direction that is substantially parallel to the axis of the stuffing tube 5.

More particularly, the second clipping head 30b is supported by a framework 36 which can slide by means of movement wheels 36a, 36b along longitudinal guiding members 37a, 37b, which extend above the resting surface 29, substantially parallel to the axis of the stuffing tube 5.

The actuation for movement of the second clipping head 30b with respect to the base frame 2 is performed by a pair of cylinders 38a, 38b, which are connected, by means of their stems, to the second clipping head 30b and are supported by a supporting element 39, which in turn is connected to the base frame 2 and is constituted by a cross-member.

Advantageously, the supporting element 39 is in turn adjustably movable along a direction that is substantially parallel to the axis of the stuffing tube 5, so that by means of its movement, it is possible to adjust the distance between the second clipping head 30b and the first clipping head 30a, according to the length of the portion of meat 100 to be stuffed.

In particular, the supporting element 39 is mounted along a pair of worm screws 40a, 40b, which are supported, so that they can rotate about their respective axes, by the base frame 2 and are extended substantially parallel to the axis of the stuffing tube 5.

The worm screws 40a and 40b are engaged by respective female threads 41a, 41b, which are integral with the supporting element 39.

Moreover, respective pulleys 42a, 42b are functionally connected to the worm screws 40a, 40b and are in turn kinematically connected, by means of a belt 43, to a handwheel 44, which can rotate with respect to the base frame 2 and can be operated manually by the operator to turn the worm screws 40a, 40b and consequently obtain the movement of the supporting element 39 along the worm screws 40a, 40b.

Advantageously, a movable mat 45 is mounted on the base frame 2 and in practice forms the resting surface 29 and is designed to receive by resting contact and entrain the portion of meat 100 that exits the stuffing tube 5.

In particular, the movable mat 45 can slide with respect to the base frame 2 along substantially horizontal guiding elements and is connected at one end to the carriage 20, for example by means of a pair of linkages 47, so that the movement of the carriage 20 can cause the sliding of the movable mat 45 along the guiding elements.

At its opposite end, the movable mat 45 is instead connected to a counterweight 48, which can move slidingly along an accommodation seat 49 of the movable mat 45, which extends substantially vertically below the plane of the guiding elements and is designed to accommodate the movable mat 45 when the carriage 20 is in the position close to the stuffing tube 5 that corresponds to the advanced position of the supporting means 10 of the casing 6.

Advantageously, means are provided for varying the position, in terms of height, of at least one portion of the resting surface 29 formed by the movable mat 45, and allow to lower at least the portions of the movable mat 45 that are located at the clipping heads 30a, 30b, in order to allow the free movement of their crimpers 31a, 31b and allow the latter to adequately gather the lower portion of the casing 6 as well when they are brought to their working position.

Such means are constituted for example by at least one support 46, which is mounted on the base frame 2, substantially at the first clipping head 30a, and on which a portion of the movable mat 45 rests. In particular, the support 46 is movable on command, by means of a respective actuator, between a lowered position, which it assumes when the engagement means 12 are in the receiving position and when the first clipping head 30a is activated, so as to move downward, away from the engagement means 12 and the first clipping head 30a, the portion of the movable mat 45 that is resting thereon, and a raised position, which it assumes when the portion of meat 100 is made to exit the stuffing tube 5 in order to allow the movable mat 45 to receive correctly the portion of meat 100.

It should be noted that the carriage 20 and consequently also the movable mat 45 are functionally connected to automatic means for movement along the linear guides 22, which are conveniently constituted by a driving belt 50 which is closed in a loop and is arranged below the resting surface 29 formed by the movable mat 45.

The driving belt 50 unwinds between two guiding wheels 51, one of which is motorized, which are rotatably supported by the base frame 2, so as to form two portions of the driving belt 50 which are substantially horizontal and mutually superimposed; the upper portion is associated with the carriage 20, so that unwinding the driving belt 50 in one direction or the other, between the two guiding wheels 51, causes the sliding of the carriage 20 along the guides 22 toward or away from the stuffing tube 5 and consequently causes the movement of the movable mat 45 on the guiding elements, as a result of the connection between the carriage 20 and the movable mat 45.

Conveniently, between the unwinding means 7 of the spool 8 of the ribbon 9 of casing 6 and the supporting means 10 there is a tub 52 which contains a saline solution and inside which a portion of the ribbon 9 of the casing 6 comprised between the unwinding means 7 and the supporting means 10 is immersed in order to hydrate it, so as to achieve an adequate softening of the casing 6 and give it suitable elasticity characteristics.

In the tub 52 there is a plurality of engagement rollers 53 for the ribbon 9 of casing 6 which allow to define a path of the ribbon 9 within the tub 52.

Advantageously, means for controlling the hydration process to which the casing 6 is subjected inside the tub 52 are provided.

Such control means comprise means for adjusting the amount of ribbon 9 of the casing 6 that is immersed in the tub 52.

The adjustment means are conveniently constituted by the traction means of the ribbon 9 of the casing 6 that allow unwinding the spool 8 from the supporting roller 7a and which are, for example, constituted by at least one pair of traction rollers 54a, 54b, which engage on mutually opposite sides the ribbon 9 of the casing 6 and can be rotationally actuated to produce the advancement of the ribbon 9 from the spool 8.

Moreover, the means for controlling the hydration process comprise means for controlling the temperature of the saline solution, which comprise at least one temperature sensor 55 and at least one heater 56 which are associated with the tub 52.

The temperature sensor 55 and the heater 56 are connected to an electronic control unit 57, which controls the activation of the heater 56 as a function of the signals that arrive from the temperature sensor 55 in order to ensure that the temperature of the saline solution in the tub 52 is maintained at a desired value.

Conveniently, the means for controlling the temperature of the saline solution also comprise means for circulating the saline solution within the tub 52, which are constituted for example by at least one circulation pump, not shown, which is driven by the electronic control unit 57 and allows to keep the saline solution in the tub 52 in motion, so as to ensure an adequate uniformity of the temperature of the saline solution in said tub.

Advantageously, the means for controlling the hydration process of the casing 6 may furthermore comprise at least one sensor 58 for detecting the salt concentration in the saline solution, which is conveniently functionally connected to the electronic control unit 57, so that the latter can command the activation of the saline solution circulation means also as a function of the signal received from the salt concentration detection sensor 58.

Optionally, it is also possible to provide means for introducing dosed amounts of water and/or salt in the tub 52, which can be controlled by the electronic control unit 57, as a function of the signal received from the salt concentration detection sensor 58, in order to maintain the salt concentration of the saline solution at a predefined value.

Advantageously, a device 60 for the removable locking of the casing 6 is provided between the tub 52 and the supporting means 10 of the inlet end 6a of the casing 6 and is supported by the base frame 2.

Such removable locking device 60 is conveniently constituted by a presser element 61, which faces an abutment roller 62, supported by the base frame and engageable by the casing 6 in its path between the spool 8 and the supporting means 10. The presser element 61 can be actuated by a respective actuation cylinder between a release position, in which it is spaced from the abutment roller 62, in order to allow the casing 6 to slide on the abutment roller 62, and a locking position, in which it is brought closer to the abutment roller 62, so as to clamp the casing 6 against the abutment roller 62, preventing it from being able to slide.

It should be mentioned that conveniently the machine is furthermore provided with an automatic loader of the portions of meat 100 to be stuffed into the mold 3, which advantageously comprises a loading mat 65, which is arranged laterally to the mold 3 and is provided with a plurality of seats 65a arranged sequentially along the loading mat 65 and suitable for accommodating a single portion of meat 100 to be loaded into the mold 3.

Advantageously, means for discharging the portions of meat 100 that are stuffed from the machine, are arranged between the clipping heads 30a, 30b.

Such unloading means comprise, for example, a pair of plates 70a, 70b, which can move transversely with respect to the axis of the stuffing tube 5 to propel the portion of meat 100 being stuffed in each instance toward an unloading chute 71, which is arranged laterally adjacent to the base frame 2.

It should also be added that, conveniently there is also a nozzle, not shown, which is adapted to emit a jet of air in the direction of the stuffing tube 5 in order allow the movement, away from the stuffing tube 5, of the portion of casing 6 that remains fitted thereon after the first clipping head 30a has cut the casing 6, so as to prepare the stuffing tube 5 to receive a new portion of the casing 6 to process a subsequent portion of meat 100.

The operation of the machine, according to the invention, is as follows.

The operator initially prepares the machine by loading the spool 8 onto the supporting roller 7a and by threading the ribbon 9 of casing 6 between the traction rollers 54a, 54b and on the engagement rollers 53 and inserting it between the abutment roller 62 and the presser element 61 in the release position.

With the supporting means 10 in the retracted position, the operator then fits the inlet end 6a of the casing 6 onto the opening body 23, making it slide between the opening body 23 and the resting rollers 24a, 24b, until the inlet end 6a of the casing 6 is slightly beyond the end of the opening body that is directed toward the stuffing tube 5.

Moreover, the operator adjusts the distance between the two clipping heads 30a, 30b by acting on handwheel 44, according to the length of the portions of meat 100 that are to be stuffed.

Once the machine has been prepared in this way, the operator loads the portions of meat 100 to be stuffed onto the loading mat 65.

When the automatic processing sequence of the machine is started, the engagement means 12 are in the receiving position, with the laminas 13 in the disengagement position, while the clipping heads 30a, 30b are deactivated, so that the respective crimpers 31a, 31b are in the resting position and the separator elements 34a, 34b, are in the open position.

In this situation, the means 27 for the removable retention of the casing 6 fitted on the opening body 23 are activated, so as to block the inlet end 6a of the casing 6 with respect to the carriage 20, and the carriage 20 is moved, by the driving belt 50, in the direction of the stuffing tube 5, so as to move the supporting means 10 from the retracted position to the advanced position, consequently bringing the inlet end 6a of the casing 6 proximate to the outlet end 5b of the stuffing tube 5, so that the laminas 13 in the disengagement position can enter the casing 6.

During the movement of the carriage 20 in the direction of the stuffing tube 5, the movable mat 45 is inserted by the counterweight 48 into its accommodation seat 49.

At this point, the means 27 for removable retention of the casing 6 on the opening body 23 are deactivated and the actuation cylinders 14a and 14b of the supporting body 14 of the laminas 13 are activated, so as to move the engagement means 12 from the receiving position to the application position.

During the transition of the engagement means 12 from the receiving position to the application position, the laminas 13 are moved from the disengagement position to the engagement position with the casing 6, which is therefore retained between the laminas 13 in the engagement position and the locator means 16, so that it too is entrained in the movement of the supporting body 14 and is thus fitted with a portion of itself around the stuffing tube 5.

At this point, the braking means 18 are activated to ensure that the portion of the casing 6 fitted on the stuffing tube 5 is locked.

Then the loading mat 65 inserts a portion of meat 100 into the mold 3 and the complementary mold part 3a is moved into the closure position, so as to shape the portion of meat 100 inserted in the mold 3.

The movement of the pusher 4 is then activated, which pushes the portion of meat 100 shaped in the mold 3 through the stuffing tube 5, bringing it practically adjacent to the opening body 23, which has remained in a position that is adjacent to the outlet end 5b of the stuffing tube 5.

At this point, while the pusher 4 continues to move forward, pushing the portion of meat 100 past the outlet end 5a of the stuffing tube 5, the supporting means 10 are returned to the retracted position and, more particularly, the carriage 20 is moved backward by the driving belt 50, with a motion that is synchronized with the movement of the pusher 4, so that it is progressively moved away from the stuffing tube 5.

In its movement away from the stuffing tube 5, the carriage 20 draws with it the opening body 23, which, since it is not retained with respect to the casing 6 by the removable retention means 27, is moved by the carriage 20 so as to slide within the casing 6, causing it to open.

As the carriage 20 is moved backward in the opposite direction to the stuffing tube 5, the movable mat 45 is dragged out of its accommodation seat 49 and is made to slide on the guiding elements, so that the portion of meat 100 that is pushed out of the stuffing tube 5 by the pusher 4 can be received in a resting arrangement and followed by the moving movable mat 45.

Once the portion of meat 100 that is resting on the movable mat 45 has been brought between the two clipping heads 30a, 30b, the separator elements 34a, 34b are brought into the closed position and the pusher 4 is retracted.

At this point, the crimpers 31a, 31b of the clipping heads 30a, 30b are moved into the working position, the removable locking device 60 is activated, so as to block the possibility of further sliding of the ribbon 9 of casing 6, and the second clipping head 30b is moved by the cylinders 38a, 38b toward the first clipping head 30a, so as to compress the portion of meat 100 inserted in the casing 6.

Then the punch 32 of the clipping head 30a is first moved downward, so as to apply a clip to the casing 6, so as to close it at a first end of the portion of meat 100, and then the punch 32 of the clipping head 30b is also moved downward, so as to apply another clip to the casing 6 and consequently close the casing 6 also at the other end of the portion of meat 100.

At this point, the blades 33 for cutting the casing 6 are activated and then, once the crimpers 31a, 31b have been returned to their resting position and the separator elements 34a, 34b have been returned to their open position, the second clipping head 30b is returned by the cylinders 38a, 38b to its original position and the plates 70a, 70b are activated so as to push the stuffed portion of meat 100 toward an unloading chute 71.

In practice it has been found that the invention achieves the intended aim and objects, providing a meat stuffing machine that allows to perform automatically the steps of stuffing portions of meat constituted by whole muscles into casings of substantially the same diameter.

The invention thus conceived is susceptible of numerous modifications and variations, all of which are within the scope of the accompanying claims; all the details may furthermore be replaced with other technically equivalent elements within the scope of the appended claims.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A meat stuffing machine, comprising:
a base frame (2) which supports at least one mold (3) for forming a portion of meat (100) to be stuffed;
a pusher (4), for conveying the portion of meat (100) through a stuffing tube (5) which communicates, at an inlet end (5a) of said stuffing tube (5), with said mold (3), a casing (6) being applicable on said stuffing tube (5) and being designed to accommodate inside it the portion of meat (100) moved by said pusher (4);
unwinding means (7) for unwinding a spool (8) of a ribbon (9) of said casing (6) in a flattened condition;
supporting means (10) for supporting an inlet end of said casing (6) in an open condition, said supporting means (10) being movable on command between a retracted position, in which they are spaced from an outlet end (5b) of said stuffing tube (5), and an advanced position, in which they are closer to the outlet end (5b) of said stuffing tube (5);
application means (11), arranged at said stuffing tube (5), for applying said casing (6) on said stuffing tube (5) which can be activated on command in order to fit at least one portion of said casing (6) on said stuffing tube (5), said application means (11) having means (12) for the engagement of said casing (6) which can move between a receiving position, in which they are arranged in a position that faces the outlet end (5b) of said stuffing tube (5), and in a retracted condition in the direction of the axis of said stuffing tube (5), in order to allow their insertion in the inlet end (6a) of said casing (6), with said supporting means (10) in said advanced position, and an application position, in which they are arranged so as to be spaced with respect to the outlet end (5b) of said stuffing tube (5) in the direction of said mold (3) and in an expanded condition with respect to the axis of said stuffing tube (5), in order to obtain the application of said casing (6) around said stuffing tube (5); and
a pair of clipping heads (30a, 30b) comprising a first clipping head (30a) and a second clipping head (30b), said clipping heads (30a, 30b) being disposed downstream of said stuffing tube (5), with respect to the advancement direction of the portion of meat (100) through the stuffing tube (5), said clipping heads (30a, 30b) being mutually spaced along a direction that is substantially parallel to the axis of said stuffing tube (5), said clipping heads (30a, 30b) being actuatable on command in order to close and cut said casing (6), at regions of the casing (6) that are substantially proximate to the longitudinal ends of the portion of meat (100) inserted in said casing (6);
at least one of said clipping heads (30a, 30b) being movable toward the other, and said clipping heads (30a, 30b) being adjustably positionable, relative to each other, at a predetermined distance from each other, along a direction that is substantially parallel to the axis of said stuffing tube (5), as a function of the longitudinal length of the portion of meat (100) that is to be inserted into the casing (6), and to allow the compaction of the portion of meat (100) inserted in said casing (6).

2. The machine according to claim 1, wherein said second clipping head (30b) is movable by translation, with respect to said base frame (2), along a direction that is substantially parallel to the axis of said stuffing tube (5).

3. The machine according to one or more of the preceding claims, wherein said second clipping head (30b) is supported by a framework (36) which can slide by means of movement wheels (36a, 36b) along longitudinal guiding members (37a, 37b).

4. The machine according to one or more of the preceding claims, wherein said second clipping head (30b) is actuatable in movement, with respect to said base frame (2), by a pair of cylinders (38a, 38b), supported by a supporting element (39), connected to said base frame 2.

5. The machine according to the claim 4, wherein said supporting element (39) is mounted along a pair of worm screws (40a, 40b), rotatably supported by said base frame (2) and extended substantially parallel to the axis of said stuffing tube (5), said worm screws (40a, 40b) being engaged by respective female threads (41a, 41b), integral with the supporting element (39).

6. The machine according to one or more of the preceding claims, wherein each of said clipping heads (30a, 30b) comprises a pair of respective crimpers (31a, 31b), rotationally actuatable in order to pass from a resting position, in which they are spaced laterally with respect to the axis of said stuffing tube (5), to a working position, in which they are close to the axis of the stuffing tube (5).

7. The machine according to one or more of the preceding claims, wherein said clipping heads (30a, 30b) are provided with a respective cutting blade (33).

8. The machine according to one or more of the preceding claims, wherein said first clipping head (30a) is provided with separator means (34), actuatable on command in order to engage said casing (6), so as to gather said casing (6) around the portion of meat (100) inserted in the casing (6), said separator means (34) being adapted to act as an abutment to prevent the portion of meat (100) from being dragged backward toward said stuffing tube (5).

9. The machine according to one or more of the preceding claims, further comprising, at said second clipping head (30b), gathering elements (35a, 35b) which are adapted to prepare the casing (6) for clipping while preventing the portion of meat (100) from deforming.

## Patentansprüche

1. Eine Fleischfüllmaschine, die Folgendes umfasst:
einen Grundrahmen (2), der mindestens eine Form (3) zum Formen einer einzufüllenden Fleischportion (100) trägt;
einen Schieber (4) zum Transportieren der Fleischportion (100) durch ein Einfüllrohr (5), welches an einem Einlassende (5a) des Einfüllrohrs (5) mit der Form (3) kommuniziert, wobei eine Ummantelung (6) an den Einfüllrohr (5) angebracht werden kann und dazu dient, in ihrem Inneren die von dem Schieber (4) bewegte Fleischportion (100) aufzunehmen;
Abwicklungsmittel (7) zum Abwickeln einer Spule (8) eines Fadens (9) der Ummantelung (6) in abgeflachtem Zustand;
Haltemittel (10) zum Halten eines Einlassendes der Ummantelung (6) in einem offenen Zustand, wobei die Haltemittel (10) auf Befehl beweglich sind zwischen einer eingezogenen Position, in der sie von einem Auslassende (5b) des Einfüllrohrs (5) beabstandet sind, und einer vorgeschobenen Position, in der sie näher am Auslassende (5b) des Einfüllrohrs (5) sind;
Aufbringmittel (11), angeordnet an dem Einfüllrohr (5), zum Aufbringen der Ummantelung (6) auf das Einfüllrohr (5), die auf Befehl aktiviert werden können, um mindestens einen Abschnitt der Ummantelung (6) auf das Einfüllrohr (5) aufzubringen; wobei die Aufbringmittel (11) Mittel (12) zum Halten der Ummantelung (6) haben, die sich zwischen einer Aufnahmeposition, in der sie in einer Position angeordnet sind, die dem Auslassende (5b) des Einfüllrohrs (5) zugewandt ist, und in einem eingezogenen Zustand in Richtung der Achse des Einfüllrohrs (5), um ihr Einführen in das Einlassende (6a) der Ummantelung (6) zu gestatten, wenn die Haltemittel (10) in der vorgeschobenen Position sind, und einer Aufbringposition bewegen können, in welcher sie beabstandet vom Auslassende (5b) des Einfüllrohrs (5) in Richtung der Form (3) und in einem ausgefahrenen Zustand mit Bezug auf die Achse des Einfüllrohrs (5) angeordnet sind, um die Ummantelung (6) auf das Einfüllrohr (5) aufzubringen; und
ein Paar von Schneidköpfen (30a, 30b), das einen ersten Schneidkopf (30a) und einen zweiten Schneidkopf (30b) umfasst, wobei die Schneidköpfe (30a, 30b) stromabwärts von dem Einfüllrohr (5), mit Bezug auf die Vorschubrichtung der Fleischportion (100) durch das Einfüllrohr (5), angeordnet sind; wobei die Schneidköpfe (30a, 30b) voneinander in einer Richtung beabstandet sind, die im Wesentlichen parallel zur Achse des Einfüllrohrs (5) ist, wobei die Schneidköpfe (30a, 30b) auf Befehl betätigt werden können, um die Ummantelung (6) in den Bereichen der Ummantelung (6) zu verschließen und abzuschneiden, die im Wesentlichen an die Längsenden der in die Ummantelung (6) eingefüllten Fleischportion (100) angrenzen;
wobei mindestens einer der Schneidköpfe (30a, 30b) zum anderen hin beweglich ist und die Schneidköpfe (30a, 30b) verstellbar relativ zueinander in einem vordefinierten Abstand voneinander entlang einer Richtung positionierbar sind, die im Wesentlichen parallel zur Achse des Einfüllrohrs (5) ist, abhängig von der länglichen Länge der Fleischportion (100), die in die Ummantelung (6) eingefüllt werden soll, und um die Verdichtung der in die Ummantelung (6) eingefüllten Fleischportion (100) zu ermöglichen.

2. Die Maschine gemäß Anspruch 1, wobei der zweite Schneidkopf (30b) durch Translation mit Bezug auf den Grundrahmen (2) in einer Richtung beweglich ist, die im Wesentlichen parallel zur Achse des Einfüllrohrs (5) ist.

3. Die Maschine gemäß einem oder mehreren der obigen Ansprüche, wobei der zweite Schneidkopf (30b) von einem Rahmen (36) getragen ist, der mit Hilfe von Bewegungsrädern (36a, 36b) entlang Längsführungsgliedern (37a, 37b) gleiten kann.

4. Die Maschine gemäß einem oder mehreren der obigen Ansprüche, wobei der zweite Schneidkopf (30b) mit Bezug auf den Grundrahmen (2) durch ein Paar von Zylindern (38a, 38b) beweglich ist, die von einem mit dem Grundrahmen (2) verbundenen tragenden Element (39) getragen sind.

5. Die Maschine gemäß Anspruch 4, wobei das tragende Element (39) entlang einem Paar von Schnecken (40a, 40b) montiert ist, die drehbar von dem Grundrahmen (2) getragen sind und sich im Wesentlichen parallel zur Achse des Einfüllrohrs (5) erstrecken, wobei die Schnecken (40a, 40b) mit entsprechenden Innengewinden (41a, 41b) in Eingriff stehen, die mit dem tragenden Element (39) integral sind.

6. Die Maschine gemäß einem oder mehreren der obigen Ansprüche, wobei jeder der Schneidköpfe (30a, 30b) ein Paar entsprechender Riffelwalzen (31a, 31b) umfasst, die drehend angetrieben werden können, um aus einer Ruheposition, in der sie seitlich von der Achse des Einfüllrohrs (5) beabstandet sind, in eine Arbeitsposition zu wechseln, in der sie nahe der Achse des Einfüllrohrs (5) sind.

7. Die Maschine gemäß einem oder mehreren der obigen Ansprüche, wobei die Schneidköpfe (30a, 30b) mit einer entsprechenden Schneidklinge (33) ausgestattet sind.

8. Die Maschine gemäß einem oder mehreren der obigen Ansprüche, wobei der erste Schneidkopf (30a) mit Trennungsmitteln (34) ausgestattet ist, die auf Befehl betätigt werden können, um die Ummantelung (6) zu ergreifen, um die Ummantelung (6) um die in die Ummantelung (6) eingefüllte Fleischportion (100) herum zu erfassen, wobei die Trennungsmittel (34) ausgebildet sind, um als Widerlager zu wirken, um zu verhindern, dass die Fleischportion (100) zu dem Einfüllrohr (5) zurückgezogen wird.

9. Die Maschine gemäß einem oder mehreren der obigen Ansprüche, die weiter an dem zweiten Schneidkopf (30b) Erfassungselemente (35a, 35b) umfasst, die ausgebildet sind, um die Ummantelung (6) für das Schneiden vorzubereiten und gleichzeitig zu verhindern, dass sich die Fleischportion (100) verformt.

## Revendications

1. Machine de bourrage de viande, comprenant :
un châssis de base (2) qui supporte au moins un moule (3) destiné à former une portion de viande (100) à farcir ;
un poussoir (4), destiné à acheminer la portion de viande (100) à travers un tube de bourrage (5) qui communique, à une extrémité d'entrée (5a) dudit tube de bourrage (5), avec ledit moule (3), un boyau (6) pouvant être appliqué sur ledit tube de bourrage (5) et conçu pour recevoir à l'intérieur la portion de viande (100) déplacée par ledit poussoir (4) ;
des moyens de déroulement (7) destinés à dérouler une bobine (8) d'un ruban (9) dudit boyau (6) à l'état aplati ;
des moyens de support (10) pour supporter une extrémité d'entrée dudit boyau (6) à l'état ouvert, lesdits moyens de support (10) étant mobiles sur commande entre une position rétractée, dans laquelle ils sont espacés d'une extrémité de sortie (5b) dudit tube de bourrage (5), et une position avancée, dans laquelle ils sont plus proches de l'extrémité de sortie (5b) dudit tube de bourrage (5) ;
des moyens d'application (11), disposés au niveau dudit tube de bourrage (5), pour appliquer ledit boyau (6) sur ledit tube de bourrage (5), qui peuvent être activés sur commande afin de monter au moins une partie dudit boyau (6) sur ledit tube de bourrage (5), lesdits moyens d'application (11) comportant des moyens (12) pour l'engagement dudit boyau (6) pouvant se déplacer entre une position de réception, dans laquelle ils sont disposés face à l'extrémité de sortie (5b) dudit tube de bourrage (5), et un état rétracté dans la direction de l'axe dudit tube de bourrage (5), afin de permettre leur insertion dans l'extrémité d'entrée (6a) dudit boyau (6), lesdits moyens de support (10) dans ladite position avancée, et une position d'application, dans laquelle ils sont agencés de manière à être espacés par rapport à l'extrémité de sortie (5b) dudit tube de bourrage (5) dans la direction dudit moule (3) et dans un état expansé par rapport à l'axe dudit tube de bourrage (5), afin d'obtenir l'application dudit boyau (6) autour dudit tube de bourrage (5) ; et
une paire de têtes de clippage (30a, 30b) comprenant une première tête de clippage (30a) et une deuxième tête de clippage (30b), lesdites têtes de clippage (30a, 30b) étant disposées en aval dudit tube de bourrage (5), par rapport à la direction d'avance de la portion de viande (100) à travers le tube de bourrage (5), lesdites têtes de clippage (30a, 30b) étant espacées l'une de l'autre selon une direction sensiblement parallèle à l'axe dudit tube de bourrage (5), lesdites têtes de clippage (30a, 30b) pouvant être actionnées sur commande afin de fermer et de couper ledit boyau (6), au niveau de zones du boyau (6) qui sont sensiblement proches des extrémités longitudinales de la portion de viande (100) insérée dans ledit boyau (6) ;
au moins l'une desdites têtes de clippage (30a, 30b) étant mobile vers l'autre, et lesdites têtes de clippage (30a, 30b) pouvant être positionnées de manière réglable, l'une par rapport à l'autre, à une distance prédéterminée l'une de l'autre, selon une direction sensiblement parallèle à l'axe dudit tube de bourrage (5), en fonction de la longueur longitudinale de la portion de viande (100) devant être insérée dans le boyau (6), et pour permettre le compactage de la portion de viande (100) insérée dans ledit boyau (6).

2. Machine selon la revendication 1, où ladite deuxième tête de clippage (30b) est mobile en translation, par rapport audit châssis de base (2), selon une direction sensiblement parallèle à l'axe dudit tube de bourrage (5).

3. Machine selon une ou plusieurs des revendications précédentes, où ladite deuxième tête de clippage (30b) est supportée par un châssis (36) qui peut coulisser au moyen de roues de déplacement (36a, 36b) le long d'éléments de guidage longitudinaux (37a, 37b).

4. Machine selon l'une ou plusieurs des revendications précédentes, où ladite deuxième tête de clippage (30b) est actionnable en mouvement, par rapport audit châssis de base (2), par une paire de vérins (38a, 38b), supportés par un élément de support (39), relié audit châssis de base (2).

5. Machine selon la revendication 4, où ledit élément de support (39) est monté le long d'une paire de vis sans fin (40a, 40b), supportées de manière rotative par ledit châssis de base (2) et s'étendant sensiblement parallèlement à l'axe dudit tube de bourrage (5), lesdites vis sans fin (40a, 40b) étant en prise avec des filets femelles respectifs (41a, 41b), solidaires de l'élément de support (39).

6. La machine selon une ou plusieurs des revendications précédentes, où chacune desdites têtes de clippage (30a, 30b) comprend une paire de pinces respectives (31a, 31b), pouvant être actionnées en rotation afin de passer d'une position de repos, dans laquelle elles sont espacées latéralement par rapport à l'axe dudit tube de bourrage (5), à une position de travail, dans laquelle elles sont proches de l'axe du tube de bourrage (5).

7. Machine selon l'une ou plusieurs des revendications précédentes, où lesdites têtes de clippage (30a, 30b) sont pourvues d'une lame de coupe respective (33).

8. Machine selon l'une ou plusieurs des revendications précédentes, où ladite première tête de clippage (30a) est pourvue de moyens de séparation (34), actionnables sur commande afin de venir en prise avec ledit boyau (6), de manière à rassembler ledit boyau (6) autour de la portion de viande (100) insérée dans le boyau (6), lesdits moyens de séparation (34) étant adaptés pour agir comme une butée afin d'empêcher la portion de viande (100) d'être entraînée vers l'arrière en direction dudit tube de bourrage (5).

9. Machine selon l'une ou plusieurs des revendications précédentes, comprenant en outre, au niveau de ladite deuxième tête de clippage (30b), des éléments de rassemblement (35a, 35b) qui sont adaptés pour préparer le boyau (6) au clippage tout en empêchant la portion de viande (100) de se déformer.
